# EUROPÄISCHE PATENTANMELDUNG

(11) **EP 2 372 213 A1**
(43) Veröffentlichungstag der Anmeldung: **05.10.2011**
(21) Anmeldenummer: 10405060.4
(22) Anmeldetag: 24.03.2010
(51) Int. Cl.: F16L 33/025

(54) **Klemmring und Verfahren zum Herstellen eines solchen Klemmings**

(71) Anmelder: Geberit International AG, 8645 Jona (CH)
(72) Erfinder: Baggenstos, Roger, 8645 Jona (CH); Hausheer, Roman, 6330 Cham (CH); Huber, René, 8645 Jona (CH)
(74) Vertreter: Groner, Manfred

(57) **Zusammenfassung**

Der Klemmring weist ein Band (6) auf, das ein erstes und ein zweites Ende (8, 9) besitzt, die fest miteinander verbunden sind. Das Band (6) bildet einen ringförmigen Abschnitt (13) und ein sich radial nach aussen erstreckendes Ohr (7). Das Ohr (7) ist zum Vermindern der Durchmessergrösse des ringförmigen Abschnitts (13) plastisch verformbar. Die beiden Enden (8, 9) des Bandes (6) überlappen sich im Bereich eines Brückenabschnitts (12) des Ohrs (7) und sind durch wenigstens einen Abbug (17) des ersten Endes (8) miteinander verbunden. Vorzugsweise weist das zweite Ende (9) einen Durchbruch (15) auf, in den das erste Ende (8) mit dem genannten Abbug (17) eingreift. Der Klemmring kann besonders einfach durch Stanzen und Biegen hergestellt werden.

## Beschreibung

Die Erfindung betrifft einen Klemmring mit einem Band, das ein erstes und ein zweites Ende aufweist, die fest miteinander verbunden sind und das einen ringförmigen Abschnitt und ein sich radial nach aussen erstreckendes Ohr aufweist, welches Ohr zum Vermindern der Durchmessergrösse des ringförmigen Abschnitts plastisch verformbar ist und zwei im Wesentlichen nach aussen ragende Schenkelabschnitte aufweist, die über einen Brückenabschnitt fest miteinander verbunden sind.

Klemmringe mit einem Ohr, das beispielsweise mittels einer Beisszange auf einem Rohr festziehbar ist, sind seit langem bekannt. Solche Klemmringe werden in grossen Stückzahlen benötigt und müssen deshalb sehr kostengünstig hergestellt werden können. Sie müssen aber vor allem in der Sanitärtechnik zugleich auch sehr funktionssicher sein, da Undichtigkeiten bei Rohranschlüssen zu hohen Bauschäden führen können. In der Regel werden solche Klemmringe aus einem Metallband, beispielsweise aus Metallblech hergestellt. Die beiden Enden des Metallbandes werden beispielsweise durch Punktschweissen oder gemäss der CH-A-413 519 durch eine kompakte Verflechtung der beiden Enden erreicht. Beim Klemmring nach der EP-A-1 285 192 werden die beiden Enden mit einer Spannvorrichtung miteinander verbunden, die ein Klemmband aufweist. Beim Klemmring nach der EP-A-636 826 werden die beiden Enden des Bandes lösbar miteinander verhakt. Die CH-A-399 846 zeigt einen Klemmring, bei dem die beiden Enden mittels einer Schnalle miteinander verbunden sind.

Der Erfindung liegt die Aufgabe zugrunde einen Klemmring der genannten Art zu schaffen, der noch kostengünstiger herstellbar ist.

Die Aufgabe ist gemäss Anspruch 1 dadurch gelöst, dass sich die beiden Enden des Bandes im Bereich des Brückenabschnittes überlappen und durch einen Abbug des ersten Endes miteinander verbunden sind. Beim erfindungsgemässen Klemmring kann das Ohr in einfacher Weise durch Biegen der beiden Enden hergestellt werden. Der Brückenabschnitt wird durch die sich überlappenden Enden gebildet und ist besonders stabil. Der Klemmring kann im Wesentlichen durch Stanzen und Biegen hergestellt werden. Durch Biegen wird das Ohr hergestellt und gleichzeitig werden die beiden Enden miteinander verbunden. Der Abbug des ersten Endes kann durch einen umgebogenen Lappen gebildet sein. Der Abbug kann aber auch durch mehrere Lappen, beispielsweise zwei Lappen gebildet sein. Der Lappen bzw. die Lappen sind beispielsweise um 180° umgebogen, so dass sie mit dem freien Ende das zweite Ende untergreifen und festhalten.

Nach einer Weiterbildung der Erfindung ist vorgesehen, dass das zweite Ende einen Durchbruch aufweist und das erste Ende mit dem genannten Abbug in diesen Durchbruch eingreift. Der Durchbruch ist insbesondere eine Durchstanzung des Bandes. Nach einer Weiterbildung der Erfindung erstreckt sich der Durchbruch über eine Kante des Rohres. Diese Kante befindet sich vorzugsweise in der Ebene des Brückenabschnitts. Diese Ebene verläuft vorzugsweise tangential zum ringförmigen Abschnitt.

Nach einer Weiterbildung der Erfindung ist vorgesehen, dass das erste Ende über das zweite Ende gefaltet ist. Das erste Ende befindet sich dann somit aussen und das zweite Ende innen.

Eine besonders stabile und sichere Verbindung zwischen den beiden Enden ergibt sich dann, wenn das erste Ende wenigstens eine Ausnehmung aufweist, in welche das zweite Ende mit einem stirnseitigen Teil eingreift. Die beiden Enden sind dann somit einerseits durch den genannten Abbug und andererseits durch den Eingriff des stirnseitigen Teils des zweiten Endes in die Ausnehmung des ersten Endes miteinander verbunden. Dieser stirnseitige Teil wird gemäss einer Weiterbildung der Erfindung durch zwei sich in der Ebene des Brückenabschnitts erstreckende Zungen gebildet. Diese Zungen können in einfacher Weise durch Stanzen hergestellt werden.

Nach einer Weiterbildung der Erfindung ist vorgesehen, dass der Klemmring in einem Klemmringhalter gelagert ist. Mit einem solchen Klemmringhalter kann der Klemmring besonders einfach und sicher beispielsweise an einem Fitting positioniert werden. Der Klemmringhalter kann beispielsweise am Fitting verrastet werden. Nach dem Einsetzen des zu verbindenden Rohres in den Klemmring wird dieser wie oben erwähnt durch Deformieren des Rohres zusammengezogen und damit das Rohr am Fitting festgelegt.

Nach einer Weiterbildung der Erfindung weist der Klemmringhalter eine Ohrspaltlasche auf. Diese befindet sich innerhalb des Klemmringes im Bereich des Ohres und wird beim Zusammenziehen an die Aussenseite des Rohres angelegt. Da die Ohrspaltlasche am Klemmringhalter angeordnet ist, kann der Klemmring ohne eine solche Ohrspaltlasche und damit einfacher hergestellt werden. Grundsätzlich wäre es aber auch möglich, die Ohrspaltlasche durch das Band des Klemmringes zu bilden. Zur Aufnahme der Ohrspaltlasche besitzt nach einer Weiterbildung der Erfindung der ringförmige Abschnitt zwei stufenförmige Absätze.

Beim Verfahren zum Herstellen eines erfindungsgemässen Klemmringes ist vorgesehen, dass das Band mit dem ersten und dem zweiten Ende aus einem streifenförmigen Teil ausgestanzt wird, dass das ausgestanzte Band zu einem Ring gebogen wird, dass zum Bilden des Rohres die beiden Enden jeweils in entgegengesetzter Richtung zweimal um etwa 90° umgebogen und durch einen Abbug am ersten Ende miteinander verbunden werden. Der erfindungsgemässe Klemmring kann somit allein durch Stanzen und Biegen hergestellt werden. Der durch das Verfahren hergestellte Klemmring ist dennoch funktionssicher, da ein stabiles und die beiden Ende sicher miteinander verbindendes Ohr gebildet werden kann.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: ein Schnitt durch eine Verbindung mit einem erfindungsgemässen Klemmring, einem Klemmringhalter sowie einem Fitting mit einem daran befestigten Rohr,
- Fig. 2: eine räumliche Ansicht des Klemmringhalters,
- Fig. 3: ein Schnitt durch die Verbindung nach Fig. 1,
- Fig. 4: eine räumliche Ansicht des erfindungsgemässen Klemmringes,
- Fig. 5: eine weitere räumliche Ansicht des Klemmringhalters,
- Fig. 6: eine Ansicht eines Stanzprofils und
- Fig. 7a bis 7f: räumliche Ansichten des erfindungsgemässen Klemmringes während einzelner Schritte des Verfahrens.

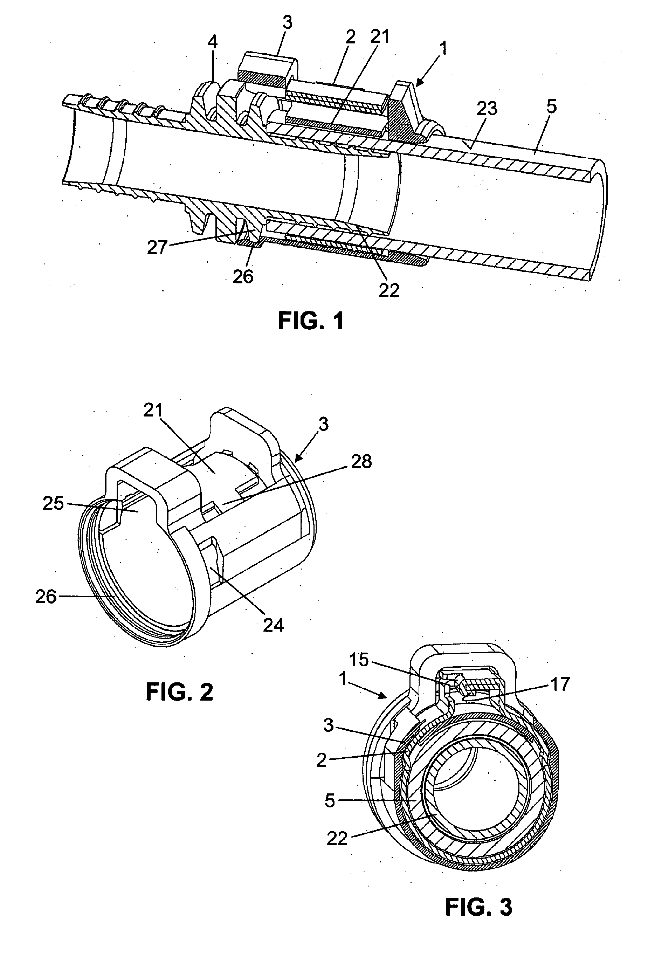

Die in Fig. 1 gezeigte Rohrklemme 1 verbindet ein Rohr 5 mit einem Anschlussstück 4, das zwei Stutzen 22 und etwa mittig radial nach aussen vorstehende Rippen 27 aufweist. Die Rohrklemme 1 besteht aus einem Klemmring 2 und einem Klemmringhalter 3. Der Klemmringhalter 3 besitzt innenseitig eine Nut 26, in welche eine der Rippen 27 eingerastet ist. Der Klemmringhalter 3 ist mit dieser Verrastung an dem Anschlussstück 4 positioniert. Das Anschlussstück 4 ist beim gezeigten Ausführungsbeispiel ein Fitting. Es sind hier aber auch andere Anschlussstücke denkbar. Das Rohr 5 ist wie ersichtlich bis zu einem Anschlag auf den Stutzen 22 aufgeschoben. Der Klemmring 2 umgibt das Rohr 5 und spannt dieses an einer Aussenseite 23 gegen den Stutzen 22. Beim Verpressen des Rohres 5 wird dieses am Stutzen 22 angepresst und damit fest mit dem Anschlussstück 4 verbunden.

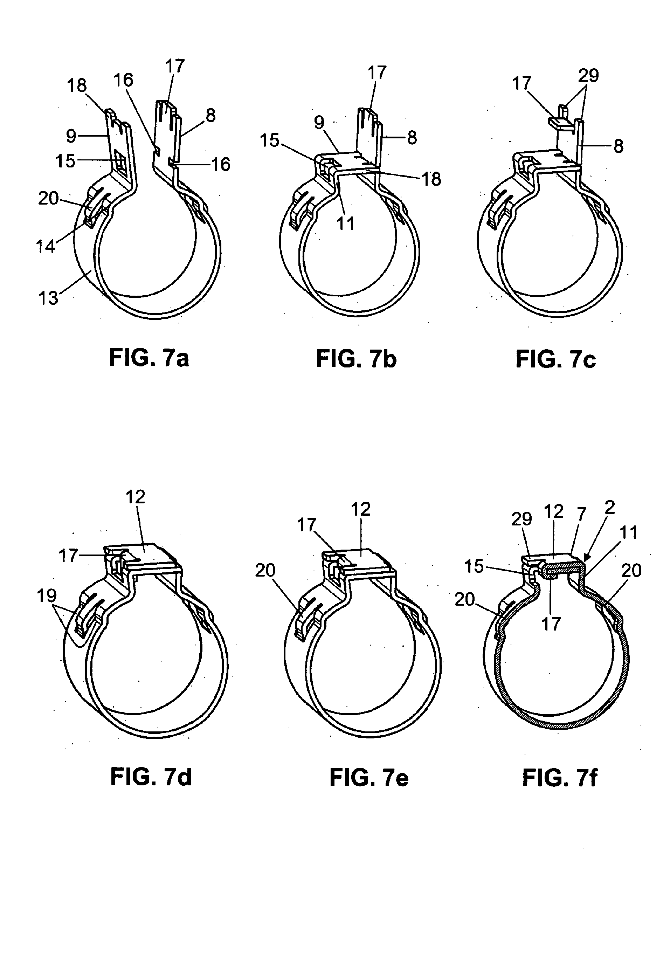

Der Klemmring 2 ist aus einem Band 6 hergestellt, das beispielsweise aus Metall, insbesondere aus Blech besteht. Das Band 6 ist so geformt, dass es einen ringförmigen Abschnitt 13 und ein radial nach aussen vorstehendes Ohr 7 bildet. Das Ohr 7 besteht aus einem ersten Schenkelabschnitt 10 und einem zweiten Schenkelabschnitt 11 sowie einem Brückenabschnitt 12. Die beiden Schenkelabschnitte 10 und 11 laufen im Wesentlichen radial nach aussen und parallel zueinander. Der Brückenabschnitt 12 verläuft im Wesentlichen tangential zum ringförmigen Abschnitt 13. Der Brückenabschnitt 12 wird durch ein erstes Ende 8 und ein zweites Ende 9 des Bandes gebildet. Diese Enden 8 und 9 sind durch einen Abbug eines Lappens 17 und durch Zungen 18 fest miteinander verbunden. Der Lappen 17 ist gemäss Fig. 3 um 180° umgebogen und untergreift das zweite Ende 9 an einer Kante eines im Wesentlichen rechteckigen Durchbruchs 15. Die beiden Zungen 18 greifen gemäss den Figuren 7a und 7b jeweils in einen Schlitz 16 des ersten Endes 8 ein. Durch diese Verlappung sind die beiden Enden 8 und 9 fest miteinander verbunden. Die Verlappung bzw. der Lappen 17 und die Zungen sind im Bereich des Brückenabschnitts 12 und damit über den Schenkelabschnitten 10 und 11 angeordnet.

Zur Aufnahme einer am Klemmringhalter 3 angeordneten Ohrspaltlasche 21 besitzt der Klemmring 3 zwei gegenüberliegende Schultern 14 sowie nach aussen ragende Stege 20. Die Ohrspaltlasche 21 überbrückt die Lücke des ringförmigen Abschnittes 13 im Bereich des Ohrs 7. Im verpressten Zustand liegt die Ohrspaltlasche 21 an der Aussenseite 23 des Rohres 5 an. Seitliche Lappen 28 der Ohrspaltlasche 21 sind hierbei unterhalb der Stege 20 angeordnet. Die Ohrspaltlasche 21 ermöglicht ein gleichmässiges Verpressen des Rohres 5.

Der Klemmringhalter 3 dient zur Lagerung und Positionierung des Klemmringes 2. Die Ohrspaltlasche 21 ist mit einem hier nicht gezeigten Filmscharnier mit dem Klemmringhalter 3 verbunden und wird beim Verpressen des Klemmringes 2 vom Klemmringhalter 3 gelöst. Eine Öffnung 25 des Klemmringhalters 3 ist so ausgebildet, dass der Klemmring 2 durch diese Öffnung 25 in den Klemmringhalter 3 eingesetzt werden kann. Seitliche Fenster 24 ermöglichen es, die korrekte Positionierung des Rohres 5 am Fitting 4 zu überprüfen. Die Fenster 24 befinden sich unmittelbar neben der Nut 26. Der Klemmring 2 wird vorzugsweise im Klemmringhalter 3 gelagert. Grundsätzlich ist jedoch auch eine Ausführung denkbar, bei welcher der Klemmring 2 ohne Klemmringhalter 3 verwendet wird. Der Klemmringhalter 3 ist vorzugsweise aus einem geeigneten Kunststoff hergestellt. Er könnte aber auch aus einem anderen Material, beispielsweise aus Blech oder dergleichen hergestellt sein.

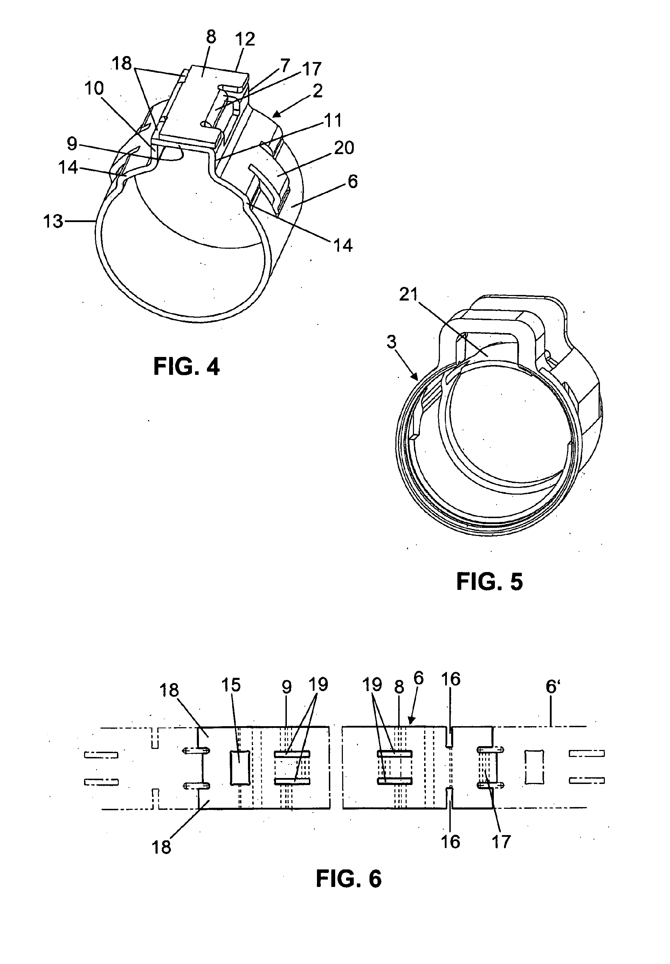

Anhand der Figuren 6 und 7 wird nachfolgend die Herstellung des Klemmrings 2 näher erläutert.

Der Klemmring 2 wird aus einem Band 6 hergestellt, das gemäss Fig. 6 aus einem längeren Band 6' ausgestanzt wird. Das längere Band 6' kann beispielsweise von einer hier nicht gezeigten Rolle abgezogen werden. Durch Stanzen werden insbesondere die Schlitze 16, der Lappen 17, die schlitzförmigen Ausnehmungen 19, der Durchbruch 15 und die beiden Zungen 18 hergestellt. Die Fig. 6 zeigt die beiden Enden 8 und 9. Zwischen diesen Enden sind Ausstanzungen vorgesehen. Dieser Bereich bildet später den ringförmigen Abschnitt 13. Mit den beiden Enden 8 und 9 wird das Ohr 7 hergestellt.

Ist das Band 8 ausgestanzt, so wird dieses in die in Fig. 7a gezeigte Form gebogen. In dieser ist der ringförmige Abschnitt 13 in der später vorgesehenen Form gebildet. Die beiden Enden 8 und 9 sind im Abstand zueinander angeordnet und ragen etwa radial nach aussen. Durch Biegen sind ebenfalls bereits die beiden radial nach aussen ragenden Stege 20 und die beiden Absätze 14 gebildet.

Ausgehend von der Form gemäss Fig. 7a wird nun das zweite Ende 9 um 90° umgebogen, so dass der zweite Schenkelabschnitt 11 gebildet wird. Der umgebogene Bereich des zweiten Endes 9 bildet nun einen Teil des Brückenabschnitts 12. Der Durchbruch 15 ist nun winkelförmig ausgebildet und erstreckt sich sowohl in den zweiten Schenkelabschnitt 11 als auch in den Brückenabschnitt 12. Die beiden aussen angeordneten Zungen 18 werden bei diesem Biegevorgang in die Schlitze 16 eingeführt. Als nächstes wird nun der Lappen 17 um etwa 90° nach innen umgebogen. Seitlich bleiben zwei Zungen 29 stehen. Als nächster Schritt wird nun das erste Ende 8 um 90° in die in Fig. 7d gezeigte Position umgebogen. Der Lappen 17 greift nun wie ersichtlich in den Durchbruch 15 ein. Der umgebogene Bereich des ersten Endes 8 liegt nun über dem umgebogenen Bereich des zweiten Endes 9 und liegt an diesem an.

Als letzter Biegevorgang wird der Lappen 17 um 90° umgebogen, so dass er schliesslich gemäss Fig. 7f den abgebogenen Teil des zweiten Endes 9 umgreift und an dessen Unterseite anliegt. Die beiden Zungen 29 sind von diesem Biegevorgang nicht betroffen und erstrecken sich somit in der Ebene des Brückenabschnitts 12. Der umgebogene Lappen 17 hält den umgebogenen Teil des zweiten Endes 9 fest und sichert damit den Eingriff der Zungen 18 in die Schlitze 16. Das Rohr 7 ist somit durch eine Verlappung sehr stabil und im Wesentlichen unlösbar gebildet. Der Brückenabschnitt 12 kann sich auch dann nicht lösen, wenn das Ohr 7 zum Spannen des Klemmrings 2 beispielsweise mit einer Beisszange plastisch stark verformt wird.

Der Klemmring 2 wird nun in den Klemmringhalter 3 eingesetzt. Das Einsetzen erfolgt durch die Öffnung 25. Damit ist die Rohrklemme 1 einsatzbereit. Um das Rohr 5 mit dem

Anschlussstück 4 zu verbinden, wird die Rohrklemme 1 auf das Anschlussstück 4 aufgesetzt. Hierbei wird der Klemmringhalter 3 an der Nut 26 an der Rippe 27 verrastet. Das Rohr 5 wird nun bis zu einem Anschlag am Anschlussstück 4 auf den Stutzen 22 aufgesetzt. Durch Zusammenpressen des Ohrs 7 wird der Klemmring 2 gespannt und legt sich dadurch an die Aussenseite 23 des Rohres 5 an. Die Ohrspaltlasche 21 wird durch den Klemmring 2 ebenfalls an die Aussenseite 23 angepresst. Die Schultern 2 und die nach aussen gebogenen Stege 20 ermöglichen eine Relativbewegung zwischen der Ohrspaltlasche 21 und dem Klemmring 2. Die etwa mittig vorspringenden Lappen 28 führen die Ohrspaltlasche 21 und untergreifen im geschlossenen Zustand die Stege 20. Beim Spannen des Klemmringes 2 wird die Ohrspaltlasche 21 vom Klemmringhalter 3 gelöst. Damit dies möglich ist, ist die Ohrspaltlasche 21 über eine hier nicht gezeigte Sollbruchstelle mit dem Klemmringhalter 3 verbunden. Die seitlichen Fenster 24 ermöglichen eine visuelle Überprüfung der Position des Rohres 5 in der Rohrklemme 1.

Das Rohr 5 wird durch die Spannkraft des Klemmrings 2 verpresst und an den Stutzen 22 angepresst. Der Klemmring 2 kann mit einfachen und aufeinanderfolgenden Stanz- und Biegevorgängen hergestellt werden.

### BEZUGSZEICHENLISTE

- 1: Rohrklemme
- 2: Klemmring
- 3: Klemmringhalter
- 4: Anschlussstück
- 5: Rohr
- 6: Band
- 7: Ohr
- 8: erstes Ende
- 9: zweites Ende
- 10: erster Schenkelabschnitt
- 11: zweiter Schenkelabschnitt
- 12: Brückenabschnitt
- 13: ringförmiger Abschnitt
- 14: Absatz
- 15: Durchbruch
- 16: Schlitz
- 17: Lappen
- 18: Zunge
- 19: Ausnehmung
- 20: Steg
- 21: Ohrspaltlasche
- 22: Stutzen
- 23: Aussenseite
- 24: Fenster
- 25: Öffnung
- 26: Nut
- 27: Rippe
- 28: Lappen
- 29: Zungen

## Patentansprüche

1. Klemmring mit einem Band (6), das ein erstes und ein zweites Ende (8, 9) aufweist, die fest miteinander verbunden sind und das einen ringförmigen Abschnitt (13) und ein sich radial nach aussen erstreckendes Ohr (7) aufweist, welches Ohr (7) zum Vermindern der Durchmessergrösse des ringförmigen Abschnitts (13) plastisch verformbar ist und zwei im Wesentlichen nach aussen ragende Schenkelabschnitte (10, 11) aufweist, die über einen Brückenabschnitt (12) fest miteinander verbunden sind, **dadurch gekennzeichnet, dass** sich die beiden Enden (8, 9) des Bandes (6) im Bereich des Brückenabschnitts (12) überlappen und durch wenigstens einen Abbug (17) des ersten Endes (8) miteinander verbunden sind.

2. Klemmring nach Anspruch 1, **dadurch gekennzeichnet, dass** das zweite Ende (9) einen Durchbruch (15) aufweist und das erste Ende (8) mit dem genannten Abbug (17) in diesen Durchbruch (15) eingreift.

3. Klemmring nach Anspruch 2, **dadurch gekennzeichnet, dass** sich der Durchbruch (15) über eine Kante des Ohrs (7) erstreckt.

4. Klemmring nach einem der Ansprüche 1 bis 3, **dadurch gekennzeichnet, dass** das erste Ende (8) über das zweite Ende (9) gefaltet ist.

5. Klemmring nach Anspruch 4, **dadurch gekennzeichnet, dass** das erste Ende (8) wenigstens eine Ausnehmung (16) aufweist, in welche das zweite Ende (9) mit einem stirnseitigen Teil (18) eingreift.

6. Klemmring nach Anspruch 5, **dadurch gekennzeichnet, dass** der stirnseitige Teil (18) sich in der Ebene des Brückenabschnitts (12) erstreckt.

7. Klemmring nach Anspruch 5 oder 6, **dadurch gekennzeichnet, dass** die wenigstens eine Ausnehmung (16) ein seitlicher Einschnitt im Band (6) ist.

8. Klemmring nach einem der Ansprüche 1 bis 7, **dadurch gekennzeichnet, dass** die beiden Enden (8, 9) jeweils um etwa 90° umgebogen sind und die entsprechenden Biegungen jeweils eine Kante des Ohrs (7) bilden.

9. Klemmring nach einem der Ansprüche 1 bis 8, **dadurch gekennzeichnet, dass** er in einem Klemmringhalter (3) gelagert ist.

10. Klemmring nach Anspruch 9, **dadurch gekennzeichnet, dass** der Klemmringhalter (3) eine Ohrspaltlasche (21) aufweist.

11. Klemmring nach Anspruch 11, **dadurch gekennzeichnet, dass** der ringförmige Abschnitt (13) des Bandes zwei gegenüberliegende stufenförmige Absätze (14) für die Aufnahme der Ohrspaltlasche (21) aufweist.

12. Verfahren zum Herstellen eines Klemmrings (2) nach einem der Ansprüche 1 bis 11, **dadurch gekennzeichnet, dass** das Band (6) mit dem ersten und dem zweiten Ende (8, 9) aus einem längeren Band (6') ausgestanzt wird, dass das ausgestanzte Band (6) zu einem Ring gebogen wird, dass zum Bilden des Ohres (7) die beiden Enden (8, 9) jeweils in entgegengesetzter Richtung zweimal um etwa 90° umgebogen und durch einen Abbug (17) miteinander verbunden werden.

13. Verfahren nach Anspruch 12, **dadurch gekennzeichnet, dass** beim Stanzen am ersten Ende (8) ein umbiegbarer Lappen (17) und am zweiten Ende (9) ein Durchbruch (15) gebildet werden.

14. Verfahren nach Anspruch 13, **dadurch gekennzeichnet, dass** der Lappen (17) um etwa 180° um eine Kante des Durchbruchs (15) umgebogen wird.

15. Verfahren nach einem der Ansprüche 12 bis 14, **dadurch gekennzeichnet, dass** der Klemmring (2) in einen Klemmringhalter (3) eingesetzt wird.
